# EUROPÄISCHE PATENTANMELDUNG

(11) **EP 4 485 737 A2**
(43) Veröffentlichungstag der Anmeldung: **01.01.2025**
(21) Anmeldenummer: 24183093.4
(22) Anmeldetag: 19.06.2024
(51) Int. Cl.: H02J 3/18, H02M 7/483, H02M 7/49

(54) **LEISTUNGSFLUSS-REGELSYSTEM ZUM EINSATZ IN EINEM ELEKTRISCHEN NETZ**

(30) Priorität: 26.06.2023 DE 102023116752
(71) Anmelder: Rheinland-Pfälzische Technische Universität Kaiserslautern-Landau, 67663 Kaiserslautern (DE)
(72) Erfinder: Tashakor, Nima, 67663 Kaiserslautern (DE); Götz, Stefan M., 67663 Kaiserslautern (DE)
(74) Vertreter: Durm Patentanwälte PartG mbB

(57) **Zusammenfassung**

Eine Regelmoduleinheit (30) für ein Leistungsfluss-Regelsystem (90), welches eingerichtet ist zum Einsatz in einem elektrischen Netz (12) und zum Anpassen der Spannung und/oder des Stroms in mindestens einer Leitung (20) des Netzes (12), umfasst zwei Leitungsanschlüsse (60), die dazu ausgebildet sind, die Regelmoduleinheit (30) elektrisch in Serie mit der Leitung (20) des Netzes (12) zu schalten, und ein erstes Regelmodul (300, 302) und ein weiteres Regelmodul (300, 304), das zu dem ersten Regelmodul (300, 302) in Serie geschaltet ist. Das Regelmodul (300) ist derart verschaltet, dass eine galvanisch definierte Verbindung mit einer Spannungsversorgungseinheit (40) herstellbar ist, die derart regelbar ist, dass das Potential des Regelmoduls (300) dem Potential der Leitung (20) des Netzes (12) in einer vordefinierten Weise folgt. Die Spannungsversorgungseinheit (40) hat mehrere Spannungsmodule (400), wobei jedes Spannungsmodul (400) dazu ausgebildet und eingerichtet ist, um ein oder mehrere Regelmodule (300) eines Leistungsfluss-Regelsystems (90) mit Energie zu versorgen, um ein Anpassen der Spannung und/oder des Stroms in der Leitung eines elektrischen Netzes (12) zu bewirken. Jedes Spannungsmodul (400) umfasst ein Netzinterface (410) zum Anschluss an das elektrische Netz und eine Wandlereinheit (500) zum Anschluss an wenigstens ein Regelmodul (300).

## Beschreibung

Die vorliegende Erfindung betrifft eine Spannungsversorgungseinheit für ein Leistungsfluss-Regelsystem, welches eingerichtet ist zum Einsatz in einem elektrischen Netz und zum Anpassen der Spannung und/oder des Stroms in mindestens einer Leitung des Netzes. Die Anmeldung betrifft weiter ein Leistungsfluss-Regelsystem zum Einsatz in einem elektrischen Netz, das ein Regelmodul und eine Spannungsversorgungseinheit umfasst.

Die Auslastung der elektrischen Energienetze, insbesondere der Mittelspannungs- und Niederspannungsnetze, steigt in den vergangenen Jahren kontinuierlich an. Eine verteilte Stromerzeugung und eine dezentrale Stromeinspeisung durch Solaranlagen auf der einen Seite und auf der anderen Seite durch immer mehr Ladestationen für Elektrofahrzeuge führen zu dieser sich ändernden Auslastung. Einzelne Abgänge eines Verteilnetzes werden so häufig überlastet. Ein Verlegen von neuen Leitungen mit größeren Querschnitten soll vermieden werden oder löst auch das Problem oft nicht. Ähnliche Probleme liegen im Hochspannungsnetz vor, das inzwischen vermehrt durch Generation der Energie (beispielsweise auch Offshore-Wind) entfernt von den Lastzentren überlastet wird und beispielsweise sogenanntes Redispatching benötigt. Deshalb kann beispielsweise eine Spannungsregelung durch Stufenschalter an Transformatoren erfolgen. Diese können jedoch den Lastfluss in den Abgängen nur begrenzt verändern.

Auftretende Probleme und Lösungen aus dem Stand der Technik sind beispielsweise in der wissenschaftlichen Schrift Rivera et al. [S. Rivera et al., "Charging Infrastructure and Grid Integration for Electromobility" in Proceedings of the IEEE, doi: 10.1109/JPROC.2022.3216362] und in Fang et al. [Fang et al., "State-Space Modeling and Control of Grid-Tied Power Converters With Capacitive/Battery Energy Storage and Grid-Supportive Services" in Journal of Emerging and Selected Topics in Power Electronics of the IEEE, doi: 10.1109/JESTPE.2021.3101527] dargestellt.

Die EP 3 413 422 schlägt beispielsweise eine Ortsnetzstation mit einem Dreiwicklungstransformator vor, um zwei getrennte Sammelschienen von jeweils einer Unterspannungswicklung getrennt zu speisen. Auf diese Weise lässt sich auf einen geänderten Leistungsfluss in den einzelnen Sammelschienen reagieren.

Alternativ sind regelbare Transformatoren bekannt, die jedoch größere Umbaumaßnahmen und eine zusätzliche Messeinheit zum Messen der Spannung in der Sammelschiene des Niederspannungsnetzes und zum Messen des Stroms an der Einspeisung erfordern. Ein regelbarer Transformator kann jedoch eine selektive Regelung einzelner Versorgungsstränge nach wie vor nicht leisten.

In den vermaschten Strukturen von Orts-, Verteil- und auch von Übertragungsnetzen können Stromflüsse über die einzelnen Zuflüsse nicht gesteuert werden. Sie stellen sich passiv je nach Last ein. Um das Spannungsniveau eines Abgangs des Netzes zu verändern, werden Maschenstromregler eingesetzt, die die Spannungsamplitude anheben oder absenken. Die Energie für die Änderung wird in der Regel aus dem Netz selbst bezogen. Eine Änderung der Spannung in einem Netzsegment kann durch eine Verteilung der Last zwischen den diversen Zuleitungen ausgeglichen werden. Somit ist ein Maschenstromregler ein geeignetes Mittel, um die Last innerhalb einer Masche aktiv zu verschieben. Ein Maschenstromregler stellt also eine in Serie mit einer oder mehreren Phasen des Netzes befindliche Spannungsquelle dar, sodass sich in den einzelnen Maschen aufgrund diverser Lasten nicht steuerbare Stromflüsse über die einzelnen Zuflüsse regeln lassen. Allerdings benötigen die bekannten Maschenstromregler einen Leistungstransformator für eine Serieneinkopplung, um eine Spannung zwischen Leiter und Erdpotential zur Verfügung zu stellen und die Spannungsamplitude zu ändern. Derartige Transformatoren sind jedoch baulich groß und teuer.

Die eingesetzten Transformatoren führen zudem bei höheren Frequenzbestandteilen zu ungewollten Verlusten, wenngleich sie sich für niedrige Frequenzen gut eignen. Zum Kompensieren von ungewollten Verzerrungen im Netz, beispielsweise von Oberwellen, ist aber eine Einspeisung oder Entnahme von höheren Frequenzen notwendig, um die Netzqualität zu verbessern. Dafür eignen sich die bekannten Maschenregler jedoch nicht.

Beispielsweise betrifft die DE 10 2021 111 860 A1 ein Leistungsfluss-Regelmodul zum Einsatz in einem elektrischen Netz und zum Anpassen der Spannung und/oder des Stroms in einer Leitung des Netzes. Das Leistungsfluss-Regelmodul verwendet ausschließlich Schaltelemente, um die gewünschte Spannungsdifferenz in die Leitung in Serie einzuspeisen. Da die Schaltelemente für die Serieneinspeisung und das Leistungsfluss-Regelmodul floatend mit der Netzspannung vorgesehen sind und somit keinen Erdbezug und keine Verbindung zu anderen Leitungen aufweisen, müssen sie nur sehr geringe Spannungen verarbeiten.

Neben der niedrigen Frequenzgrenze und auch Spannungsgrenze sind Lösungen aus dem Stand der Technik ungeeignet für schnelle Anwendungen oder bei hohen Spannungen, beispielsweise aufgrund hoher Netzspannungen oder hoher zu überwindender Impedanzen.

Es besteht somit weiterhin ein Bedarf an kostengünstigen Lösungen, mit denen die Netzqualität in vermaschten Netzen verbessert werden kann und mit denen die Lastverteilung angepasst werden kann.

Gelöst wird die vorliegende Aufgabe durch eine Regelmoduleinheit für ein Leistungsfluss-Regelsystem mit den Merkmalen des Anspruchs 1, durch eine Spannungsversorgungseinheit mit mehreren Spannungsmodulen mit den Merkmalen des Anspruchs 3 und mit einem Leistungsfluss-Regelsystem, eingerichtet zum Einsatz in einem elektrischen Netz und eingerichtet zum Anpassen der Spannung und/oder des Stroms in mindestens einer Leitung des Netzes, mit den Merkmalen des Anspruchs 10.

In einem ersten Aspekt betrifft die vorliegende Erfindung eine Regelmoduleinheit für ein Leistungsfluss-Regelsystem, welches eingerichtet ist zum Einsatz in einem elektrischen Netz und zum Anpassen der Spannung und/oder des Stroms in mindestens einer Leitung des Netzes.

Die Regelmoduleinheit umfasst zwei Leitungsanschlüsse, die dazu ausgebildet sind, die Regelmoduleinheit elektrisch in Serie mit der Leitung des Netzes zu schalten. Die Regelmoduleinheit hat ein erstes Regelmodul und ein weiteres Regelmodul, das zu dem ersten Regelmodul in Serie geschaltet ist. Jedes Regelmodul der Regelmoduleinheit umfasst zwei Modulanschlüsse zum seriellen Anschluss an einen der Leitungsanschlüsse oder an einen Modulanschluss eines benachbarten Regelmoduls, zwei Halbbrücken aus mehreren in Serie geschalteten Schaltelementen, einen zwischen den Halbbrücken parallel geschalteten Energiespeicher und zwei Energieanschlüsse zum Anschluss an eine Spannungsversorgungseinheit. Die Halbbrücken jedes Regelmoduls sind jeweils mit einem der Modulanschlüsse elektrisch verbunden. Das Regelmodul ist derart verschaltet, dass eine elektrische Verbindung mit der Spannungsversorgungseinheit herstellbar ist, die es erlaubt, dass das Potential des Regelmoduls dem Potential der Leitung des Netzes folgt. Die Verbindung kann derart regelbar sein, dass das Potential des Regelmoduls dem Potential der Leitung in einer vordefinierten Weise folgt.

Streng genommen müssen nicht alle Teile des Moduls gleiches Potential aufweisen. Die untere Schiene hat ein um die Modulversorgungsspannung niedrigeres Potential als die obere Schiene. Die Spannung der entsprechenden Netzphase sollte dazwischen liegen. So wäre das zumindest für nur ein Modul. Hier sind nun aber mehrere Module zusammen vorhanden. In der Tat sollte das Potential des der Leitung am nächsten gelegenen Moduls auch wieder mit einer Versorgungsschiene unter und mit der anderen Versorgungsschiene über der Netzspannung liegen. Das gilt auch für das randständige Modul auf der anderen Seite für die dortige Leitung. Die Module dazwischen sollten potentialmäßig entsprechend dazwischen stehen, was jeweils heißt, dass die Anschlüsse (näherungsweise) potentialmäßig zwischen den entsprechenden Potentialen der Versorgungsschienen liegen (keine strengen Ungleichungen, Gleichheit gilt auch). Dadurch, dass mehrere Module vorliegen, muss die Leitungsspannung der "rechten" Leitung nicht innerhalb der Versorgungsschienen des am weitesten "links" liegenden Moduls liegen. Die Reihe der Module addiert ihre Spannung auf und kann entsprechend Spannungsdifferenzen zwischen unterschiedlichen Netzen weit oberhalb der Versorgungsspannung eines Regelmoduls überbrücken, ausgleichen oder regeln.

Die Schaltelemente der Regelmodule sind erfindungsgemäß dazu ausgebildet, die Amplitude der Spannung auf zumindest einer ersten Seite der Leitung gegenüber einer zweiten Seite der Leitung zu erhöhen oder zu reduzieren, um die Spannung anzupassen, um die Phase der Spannung zu verschieben und/oder um den Stromfluss in der Leitung entsprechend zu steuern.

Im Sinne der Erfindung wird eine Leitung des Netzes als eine Phase des Netzes verstanden. Ein dreiphasiges Netz hat also drei Leitungen, wobei ein Regelmodul zum seriellen Anschluss einer der Phasen des Netzes bzw. einer der Leitungen des Netzes vorgesehen ist.

Die Ausbildung der Regelmoduleinheit mit mehreren Regelmodulen bietet den Vorteil, dass die verwendeten Schaltelemente, die zu Halbbrücken verschaltet sind, nur einen Bruchteil der Netzspannung oder der notwendigen Differenzspannung bei einer floatenden Einkopplung verwenden. Die Schaltelemente sind in der Regel Halbleiterbauelemente, die folglich auf geringe Spannungen ausgelegt sein können. Beispielsweise können Transistoren eingesetzt werden.

Die Verwendung mehrerer Regelmodule in der Regelmoduleinheit führt dazu, dass die jeweilige Spannung am Regelmodul, die verarbeitet werden muss, deutlich geringer ist. Bei einer Vielzahl von n Regelmodulen in der Regelmoduleinheit reduziert sich somit die zu verarbeitende Spannung in dem einzelnen Regelmodul auf den n-ten Teil der Spannung. Durch die Serienschaltung der einzelnen Regelmodule addieren sich die entsprechenden Spannungen der Module. Gleiches gilt, wenn Module parallel geschaltet werden, für die Ströme.

Gemäß einem weiteren Aspekt betrifft die vorliegende Erfindung eine Spannungsversorgungseinheit mit mehreren Spannungsmodulen. Jedes Spannungsmodul ist dazu ausgebildet und eingerichtet, ein oder mehrere Regelmodule einer Regelmoduleinheit oder eines Leistungsfluss-Regelsystems mit Energie zu versorgen, um auf diese Weise ein Anpassen der Spannung und/oder des Stroms in der Leitung des elektrischen Netzes zu bewirken. Jedes Spannungsmodul oder Spannungsversorgungsmodul der Spannungsversorgungseinheit umfasst ein Netzinterface zum Anschluss an ein benachbartes Spannungsmodul oder ein elektrisches Netz, bevorzugt zum Anschluss an das elektrische Netz, für das die Spannungsversorgungseinheit verwendet wird, und eine Wandlereinheit zum Anschluss an wenigstens ein Regelmodul der Regelmoduleinheit.

Da die Spannungsversorgungseinheit mehrere Spannungsmodule umfasst, wird die jeweilige Spannung des Netzes in kleinere Einheiten zerlegt, die durch in Serie geschaltete Spannungsmodule mit geringerer Spannung bereitgestellt werden. Auch ist es denkbar, dass die Spannungsmodule in einer Mischung aus Serien- und Parallelverschaltung verwendet werden. Hier wird ebenfalls nur eine geringere Spannung bereitgestellt. Durch die Serienschaltung addieren sich entsprechend die Spannungen der Module bzw. bei einer Parallelschaltung addieren sich die Ströme der einzelnen Module.

Während die Verschaltung von Modulen bereits in anderen Bereichen der Elektronik bekannt ist, hat sich im Rahmen der Erfindung herausgestellt, dass der Einsatz von Spannungsmodulen mit geringerer Spannung in einer Spannungsversorgungseinheit problematisch ist. Beispielsweise beschreiben die wissenschaftlichen Schriften Fang et al. [J. Fang et al., "A Review of Multilevel Converters With Parallel Connectivity" in IEEE Transactions on Power Electronics, vol. 36, no.11, pp. 12468-12489, Nov.2021, doi: 10.1109/TPEL.2021.3075211], Goetz et al. (2012) [S. M. Goetz et al., "Circuit topology and control principle for a first magnetic stimulator with fully controllable waveform", 2012 Annual International Conference of the IEEE Engineering in Medicine and Biology Society, San Diego, CA, USA, 2012, pp. 4700-4703, doi: 10.1109/EMBC.2012.634 7016], Tashakor et al. [Tashakor et al., "Low-Frequency Scheduler for Optimal Conduction Loss in Series/Parallel Modular Multilevel Converters" in IEEE Transactions on Power Electronics, vol. 37, no. 3, pp. 2551-2561, March 2022, doi: 10.1109/TPEL.2021.3110213.], Goetz et al. (2014) [S. M. Goetz et al., "Modular Multilevel Converter With Series and Parallel Module Connectivity: Topology and Control" in IEEE Transactions on Power Electronics, vol. 30, no.1, pp. 203-215, Jan. 2015, doi: 10.1 109/TPEL.2014.2310225], und Tashakor et al. [Tashakor et al., "Modular Multilevel Converter With Sensorless Diode-Clamped Balancing Through Level-Adjusted Phase-Shifted Modulation" in IEEE Transactions on Power Electronics, vol. 36, no.7, pp. 7725-7735, July 2021, doi: 10.1109/TPEL.2020.3041599.] diverse modulare Schaltungskonzepte. Insbesondere bei Schaltungen mit parallelen Verbindungsmodi ist ferner dem Fachmann aus dem Stand der Technik, beispielsweise Goetz et al. (2016) [S. M. Goetz et al., "Control of Modular Multilevel Converter with Parallel Connectivity - Application to Battery Systems" in IEEE Transactions on Power Electronics, vol. 32, no. 11, pp. 8381-8392, Nov. 2017, doi: 10.1109TPEL.2016.26458 84] bekannt, dass Zustände, Verschaltungszustände oder Modi sowohl als Zustände von Modulen oder als Zustände von Modulverbindungen definiert werden können. Diese alternative Definition von Zuständen und Modi soll auch für die folgende Beschreibung gelten.

Die Energieversorgung bzw. der Abtransport der Energie hat sich als nicht trivial herausgestellt, wenn weiterhin die Vorteile einer sehr kompakten Versorgung ermöglicht werden sollen. Die vorliegende Erfindung und Ausgestaltung der Spannungsversorgungseinheit, insbesondere bei einer Verschaltung der Spannungsmodule in Stern-Schaltung oder in Dreieck-Schaltung (Delta-Schaltung) miteinander löst diese Problematik und verwirklicht die gewünschten Vorteile, nämlich eine sehr kompakte Bauform auf der einen Seite und die Verwendung von Schaltelementen bzw. Halbleiterbauelementen, die lediglich für kleine Spannungen ausgelegt sind auf der anderen Seite.

Kleine Spannungen in diesem Zusammenhang sind Spannungen, die deutlich unter der Netzspannung des Netzes liegen, für die die Spannungsversorgungseinheit eingesetzt wird. In der Praxis hat es sich gezeigt, dass die Spannungsmodule auf Spannungen ausgelegt sein müssen, die < 50 % der Netzspannung, bevorzugt < 25 % der Netzspannung, weiter bevorzugt < 10 % der Netzspannung und sehr bevorzugt < 5 % der Netzspannung sind.

Es hat sich als vorteilhaft erwiesen, die Spannungsversorgungseinheit so auszubilden, dass eine galvanische Isolation zu den Regelmodulen bzw. der Regelmoduleinheit des elektrischen Netzes erzeugt wird. Bevorzugt kann eine magnetische Trennung bzw. Kopplung erfolgen. Die galvanische Isolation kann beispielsweise durch einen oder mehrere Hochfrequenztransformatoren erreicht werden, durch Dual-active-Bridge-Konverter oder durch LLC-Schaltungen.

Gemäß einem dritten Aspekt betrifft die vorliegende Erfindung ein Leistungsfluss-Regelsystem, das dazu eingerichtet ist, in einem elektrischen Netz eingesetzt zu werden und die Spannung und/oder den Strom in mindestens einer Leitung des Netzes anzupassen. Das Leistungsfluss-Regelsystem umfasst eine Regelmoduleinheit mit wenigstens zwei Regelmodulen, bevorzugt mit einer Regelmoduleinheit nach einem der Ansprüche 1 oder 2, und eine Spannungsversorgungseinheit, bevorzugt mit einer Spannungsversorgungseinheit nach einem der Ansprüche 3 bis 9. Die Spannungsversorgungseinheit hat wenigstens zwei Spannungsmodule oder Spannungsversorgungsmodule zur elektrischen Versorgung der Regelmoduleinheit. Vorzugsweise besteht eine galvanische Trennung zwischen einer Regelmoduleinheit und einer Spannungsversorgungseinheit. Mit anderen Worten besteht eine galvanisch getrennte Verbindung, die es dem elektrischen Potential der Regelmoduleinheit ermöglicht, dem Potential der Leitung des Netzes zu folgen. Die Verbindung kann beispielsweise magnetischer Natur sein, also eine magnetische Kopplung umfassen.

Die galvanische Isolation zwischen der Spannungsversorgungseinheit und der Regelmoduleinheit kann über einen oder mehrere Hochfrequenztransformatoren erfolgen. Dabei kann einerseits je ein Modul der Spannungsversorgungseinheit oder eines Netzteils je ein Regelmodul (Serieneinkoppplungsmodul) der Regelmoduleinheit versorgen. Dabei ist eine 1:1-Zuordnung zwischen Regelmodul und Spannungsmodul realisiert. Alternativ, aber ebenso bevorzugt, können über eine Mehrzahl von Spannungsmodulen ein oder mehrere Regelmodule versorgt werden. Bei der Verwendung von weniger Transformatoren als Modulen können sich die Flüsse zum Teil kompensieren, was deshalb vorteilhaft ist, da kleinere Magnetkerne verwendet werden können.

Die Spannungsversorgungseinheit kann beispielsweise so ausgebildet sein, dass die Regelmodule mittels einer Magnetik, bevorzugt einer gemeinsamen Magnetik, erfolgen, etwa durch Transformatoren oder Hochfrequenztransformatoren.

Bevorzugte Ausgestaltungen der Erfindung sind in den abhängigen Ansprüchen definiert. Es versteht sich, dass die vorstehend genannten und die nachstehend noch zu erläuternden Merkmale nicht nur in der jeweils angegebenen Kombination, sondern auch in anderen Kombinationen oder in Alleinstellung anwendbar sind, ohne den Rahmen der vorliegenden Erfindung zu verlassen.

In einer bevorzugten Ausführungsform der Erfindung kann die Regelmoduleinheit derart ausgebildet sein, dass das erste Regelmodul eine weitere Halbbrücke aus in Serie geschalteten Schaltelementen aufweist. Die Schaltelemente sind parallel zu der mit dem benachbarten Regelmodul über den Modulanschluss verbundenen Halbbrücke geschaltet. Das weitere Regelmodul der Regelmoduleinheit hat zu jeder Halbbrücke eine weitere, parallel geschaltete Halbbrücke aus Schaltelementen. Die weiteren Halbbrücken sind mit einem weiteren Modulanschluss des Regelmoduls elektrisch verbunden. Auf diese Weise können die Regelmodule der Serieneinkopplung mit einem DC-Link (vom Fachmann oft auch Gleichspannungszwischenkreis genannt) niedriger Spannung und zwei Niederspannungsausgängen mit serieller und paralleler Modulverschaltung ausgebildet sein.

Der optionale Parallelmodus von Modulen erlaubt höhere Ströme bei niedrigen Serienspannungen und Serienspannungsphasen (beispielsweise Blindleistungsflüsse). Außerdem kann der Parallelmodus eine bessere Verteilung der Leistung zwischen Modulen sowie eine Ladungsverteilung ermöglichen, um beispielsweise die Spannungen der Module ähnlich zu halten. Mit dem Parallelmodus muss nicht jedes Regelmodul elektrisch mit einem Spannungsversorgungsmodul verbunden sein. Stattdessen können solche Regelmodule ohne elektrisch angeschlossenes Spannungsversorgungsmodul durch benachbarte Regelmodule über Ladungsverteilung mit dem Parallelmodus, der zeitweise Energiespeicher, beispielsweise Kondensatoren, benachbarter Module parallel schaltet und damit zu einem spannungsangleichenden Ladungsaustausch führt, versorgt werden.

Gemäß einer bevorzugten Ausführungsform der Erfindung sind die Spannungsmodule der Spannungsversorgungseinheit in Stern-Schaltung oder in Dreieck-Schaltung miteinander verschaltet.

Zumindest zwei Regelmodule mit je zumindest zwei Halbbrücken erlauben es, die jeweiligen Energiespeicher der Regelmodule dynamisch alternativ in positiver und negativer Polarität zueinander in Serie zu schalten und die gebildete Serieneinheit der Energiespeicher wiederum in Serie mit einer ersten und einer zweiten Seite einer Leitung eines elektrischen Netzes elektrisch in Serie zu schalten. Ferner erlauben die Halbbrücken den Strom innerhalb eines Regelmoduls am Energiespeicher vorbeizuleiten, was hier im Folgenden als Bypass-Modus bezeichnet wird.

Vorzugsweise ist jedes Spannungsmodul mit einem Regelmodul elektrisch verbunden, sodass ein Regelmodul von einem Spannungsmodul mit Energie versorgt wird, um ein Anpassen der Spannung und/oder des Stroms in der Leitung des elektrischen Netzes zu bewirken.

Die aus Netzinterface und Wandlereinheit gebildeten Spannungsmodule der Spannungsversorgungseinheit sind bevorzugt so ausgebildet, dass die Wandlereinheit eine Inverterschaltung und eine Inverter-/Gleichrichtereinheit und bevorzugt einen dazwischen geschalteten (magnetischen) Übertrager umfasst. Diese Inverter-/Gleichrichtereinheit wird im Folgenden als Balanciereinheit bezeichnet. Im Grunde genommen umfasst die Balanciereinheit bevorzugt wenigstens einen Gleichrichter und ist bevorzugt auf der Sekundärseite einer magnetischen Übertragung angeordnet. Die Inverterschaltung und/oder die Balanciereinheit hat bevorzugt wenigstens eine Halbbrücke aus Schaltelementen. Zwischen der Inverterschaltung und der Balanciereinheit der Wandlereinheit kann bevorzugt ein Hochfrequenztransformator vorgesehen sein. Alternativ ist es möglich, dass nicht für jedes Spannungsmodul ein eigener Hochfrequenztransformator vorgesehen ist.

Eine bevorzugte Ausführungsform der Spannungsversorgungseinheit ist derart ausgebildet, dass wenigstens eines der Spannungsmodule eine LLC- oder Dual-active-Bridge-Schaltung aufweist, die eine Kapazität und zwei Induktivitäten als galvanische Trennung zwischen der Inverterschaltung und der Balanciereinheit hat.

In einer bevorzugten Ausführungsform ist die Spannungsversorgungseinheit so aufgebaut, dass die Spannungsmodule seriell miteinander verschaltet sind.

Eine alternative Ausbildung der Spannungsversorgungseinheit sieht vor, dass zwischen den Spannungsmodulen eine dynamische serielle und parallele Verschaltung vorgesehen ist. In diesem Fall kann beispielsweise bei Verwendung einer LLC-Schaltung in dem Spannungsmodul eine galvanische Trennung zu der Balanciereinheit und somit zu dem angeschlossenen Regelmodul erfolgen. Andere galvanisch trennende Wandler sind aber ebenfalls möglich, um in den Spannungsmodulen verwendet zu werden.

Eine bevorzugte Ausführungsform des Leistungsfluss-Regelsystems hat eine Wandlereinheit, die an die Energieanschlüsse eines Regelmoduls der Regelmoduleinheit angeschlossen ist und die zwischen Regelmodul und Netzinterface geschaltet ist.

Vorzugsweise ist die Wandlereinheit der Spannungsversorgungseinheit in dem Leistungsfluss-Regelsystem derart ausgebildet, dass die Wandlereinheit eine Inverterschaltung mit wenigstens zwei Invertern hat. In einer bevorzugten Ausführungsform umfasst jeder Inverter zwei Transistoren.

Die in dem Leistungsfluss-Regelsystem verwendeten Schaltelemente sowie die Schaltelemente der Regelmoduleinheit bzw. der einzelnen Regelmodule und die Schaltelemente in der Spannungsversorgungseinheit bzw. in den einzelnen Spannungsmodulen können Halbleiterbauelemente sein, bevorzugt Transistoren.

Die Transistoren in den Regelmodulen sind bevorzugt für Kleinspannungen oder Kleinstspannungen ausgelegt. Die Auslegung hängt von dem Einsatz der Regelmodule ab. Bei einem Einsatz des Regelmoduls in einem Niederspannungsnetz mit 3 × 400 V Scheitelspannung effektiv sind die Schaltelemente für Spannungen von höchstens 100 V, bevorzugt höchstens 50 V, sehr bevorzugt höchstens 30 V, weiter bevorzugt höchstens 20 V und besonders bevorzugt höchstens 10 V ausgelegt. Die Auslegung der Transistoren hängt unter anderem davon ab, wie viele Regelmodule in der Regelmoduleinheit vorgesehen sind. Bei einer Serienschaltung von beispielsweise acht Regelmodulen können die Transistoren auf eine maximale Spannung von 50 V ausgelegt sein.

Bei einem Einsatz der Regelmodule in einer Mittelspannungsleitung mit bis zu 30 kV sind die verwendeten Transistoren bevorzugt für Spannungen ausgelegt, die < 2,5 kV, vorzugsweise < 1 kV, weiter vorzugsweise nicht > 600 V, besonders bevorzugt nicht > 200 V, sehr bevorzugt nicht > 50 V sind. Auch hier hängt die Auslegung der Transistoren von der Anzahl der verwendeten Regelmodule in der Regelmoduleinheit ab. Gleiches gilt entsprechend für den Einsatz von

Regelmodulen in einem Hochspannungsnetz mit 220 bis 400 kV mit Modulen < 10 kV, vorzugsweise < 7 kV, besonders bevorzugt < 3 kV.

Die Erfindung wird nachfolgend anhand einiger ausgewählter Ausführungsbeispiele im Zusammenhang mit den beiliegenden Zeichnungen näher beschrieben und erläutert. Hier wird exemplarisch aber ohne Beschränkung der Allgemeinheit auf ein Niederspannungsnetz oder Verteilnetz als mögliches Beispiel eines elektrischen Wechselspannungsnetzes bzw. Netzes verwiesen. Diese Beschreibung und das Beispiel des Niederspannungsnetzes schränken jedoch die Allgemeinheit eines Spannungsnetzes bzw. Ortsnetzes nicht ein. Diese können folglich ebenso auf Übertragungsnetze verweisen bzw. äquivalent für diese eingesetzt werden. Das Niederspannungsnetz in den Figuren und in der Beschreibung ist eine mögliche Ausführungsform eines Netzes und hat 3 × 400 V Außenleiterspannung effektiv. Es zeigen:
- Figur 1: eine Prinzipskizze eines Netzsegments mit drei Leitungen und einem Leistungsfluss-Regelmodul;
- Figur 2: eine Detailskizze des Netzsegments aus Figur 1;
- Figur 3: eine alternative Ausführungsform einer Spannungsversorgungseinheit;
- Figur 4: eine Prinzipskizze eines Regelmoduls einer Regelmoduleinheit;
- Figur 5: eine Prinzipskizze von Regelmodulen mit zwei Spannungsausgängen;
- Figur 6: eine Detailzeichnung eines Spannungsmoduls; und
- Figur 7: eine weitere Detailzeichnung eines Spannungsmoduls einer Spannungsversorgungseinheit.

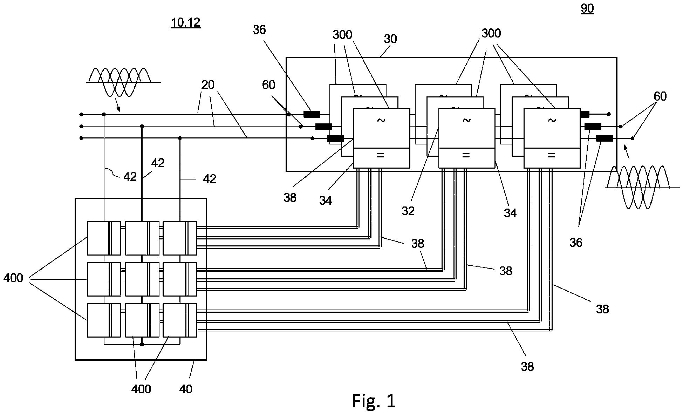

Wenngleich in den Figuren 1 bis 7 ein Netzsegment eines Spannungsnetzes oder Ortsnetzes gezeigt ist, lassen sich die verwendeten Einheiten und Module auch in anderen Bereichen einsetzen. Beispielsweise ist es möglich, dass sie auch im Automobilbereich oder im Fahrzeug, in dem ebenfalls Spannungen im Bereich von 400 V bis 1 kV vorkommen können, eingesetzt werden. Die Erfindung kann hier als sehr effizientes System verwendet werden, um Spannungsschwankungen beispielsweise im Bordnetz oder in einem Teil des Bordnetzes auszugleichen. Dies ist insbesondere deshalb vorteilhaft, weil die verwendeten Bauteile, insbesondere die Transistoren, nur für geringere Spannungen ausgelegt sein müssen und deshalb kostengünstig sind. Zudem hat das System gemäß der vorliegenden Erfindung den Vorteil, dass es sehr kompakt ist, wenig Bauraum verwendet und zudem sehr leicht ist und deshalb für den Einsatz in einem Fahrzeug geeignet ist.

Figur 1 zeigt beispielhaft ein Netzsegment 10 eines dreiphasigen elektrischen Netzes 12 mit drei Leitungen 20. Um Spannungsschwankungen in den Leitungen 20 auszugleichen, wird ein Leistungsfluss-Regelsystem 90 verwendet, das eine Regelmoduleinheit 30 und eine Spannungsversorgungseinheit 40 umfasst, wobei die Spannungsversorgungseinheit 40 die Regelmoduleinheit 30 mit Energie versorgt, um eine Anpassung der Spannung oder des Stroms in der Leitung 20 zu bewirken.

Die Regelmoduleinheit 30 umfasst mehrere Regelmodule 300, die in Serie geschaltet sind. Figur 1 zeigt jeweils drei Regelmodule 300 pro Leitung 20, also insgesamt neun Regelmodule 300. Pro Leitung 20 umfasst die Regelmoduleinheit 30 zwei Leitungsanschlüsse 60, mit denen die Regelmoduleinheit 30 mit der Leitung 20 verbunden ist. Insgesamt sind also drei Mal zwei Leitungsanschlüsse 60 vorhanden.

Zwischen den Regelmodulen 300 und dem jeweiligen Leitungsanschluss 60 der Regelmoduleinheit 30 sind optionale Netzfilter 36 vorgesehen. Die optionalen Netzfilter 36 können beispielsweise Induktoren, PI-Filter oder ähnliches sein.

Jedes Regelmodul 300 umfasst einen AC-Teil 32 und einen DC-Teil 34, wobei der DC-Teil 34 zwei Energieanschlüsse 70 aufweist, um das jeweilige Regelmodul 300 mit einem Spannungsmodul 400 der Spannungsversorgungseinheit 40 zu verbinden. Dies geschieht über die Leitungen 38. Der AC-Teil 32 kann mindestens zwei Modulanschlüsse 62 aufweisen.

Die Regelmoduleinheit 30 umfasst einzelne Regelmodule 300, von denen jedes für hohe Ströme, jedoch relativ geringe Spannungen ausgelegt sein muss. Die Ströme müssen in der gleichen Größenordnung liegen, wie die im Netz 12 vorhandenen Ströme. Die Spannungen lassen sich jedoch durch die Serienschaltung der einzelnen (insgesamt n) Regelmodule 300 pro Leitung 20 reduzieren, sodass nur ein n-tel der Spannung von dem jeweiligen Regelmodul 300 getragen werden muss.

Die Spannungsversorgungseinheit 40 umfasst mehrere Spannungsmodule 400. In der in Figur 1 beschriebenen Ausführungsform sind insgesamt neun Spannungsmodule 400 vorgesehen, sodass jedes Regelmodul 300 durch ein eigenes Spannungsmodul 400 versorgt werden kann.

Vorzugsweise hat die Spannungsversorgungseinheit 40 mehrere isolierte Ausgänge oder, wie hier gezeigt, mehrere Spannungsmodule 400, wobei je ein Ausgang für jedes floatende Regelmodul 300 der Regelmoduleinheit 30 vorgesehen ist. Die Spannungsversorgungseinheit 40 mit ihren Spannungsmodulen 400 kann sich im Prinzip aus jeder möglichen Quelle speisen. Besonders bevorzugt ist jedoch die hier gezeigte Ausführungsform, bei der die Spannungsversorgungseinheit 40 über je eine Leitung 42 mit der Leitung 20 des Netzes 12 verbunden ist.

Die einzelnen Spannungsmodule 400 können magnetisch oder galvanisch trennend miteinander verkoppelt sein, beispielsweise durch eingesetzte Hochfrequenztransformatoren.

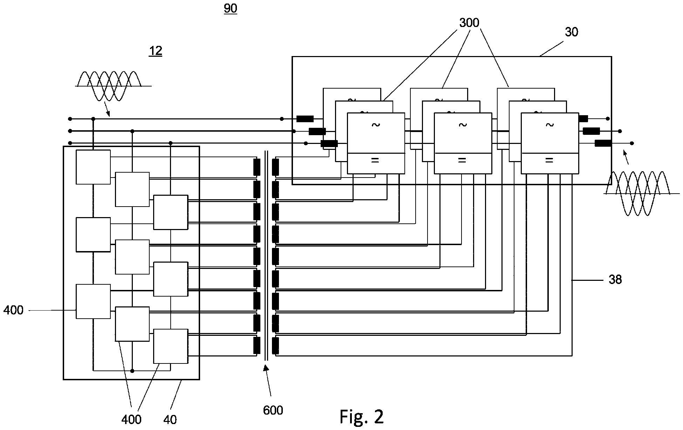

Figur 2 zeigt eine weitere Ausführungsform des Leistungsfluss-Regelsystems 90, bei der die Spannungsversorgungseinheit 40 insgesamt neun Spannungsmodule 400 aufweist, die in Stern-Schaltung verschaltet sind. Zwischen den einzelnen Spannungsmodulen 400 und den Regelmodulen 300 der Regelmoduleinheit 30 ist jeweils ein Hochfrequenztransformator 600 vorgesehen, um eine magnetische Kopplung und galvanische Trennung zwischen der Spannungsversorgungseinheit 40 und der Regelmoduleinheit 30 zu realisieren.

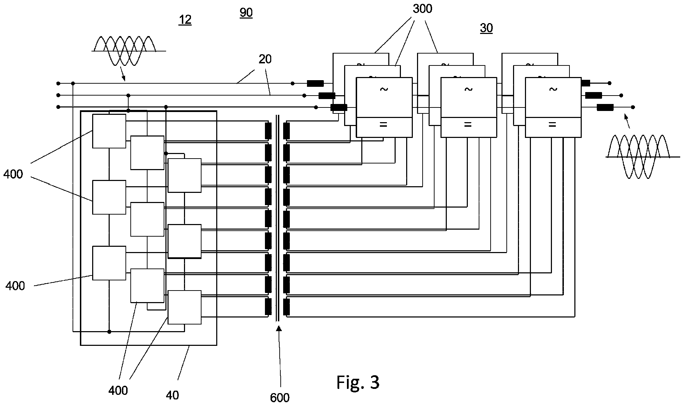

Figur 3 zeigt im Prinzip den gleichen Aufbau eines Leistungsfluss-Regelsystems 90 mit Regelmoduleinheit 30 und Spannungsversorgungseinheit 40. Allerdings sind in der hier gezeigten Ausführungsform die einzelnen Spannungsmodule 400 in Delta- oder Dreieck-Schaltung miteinander verschaltet.

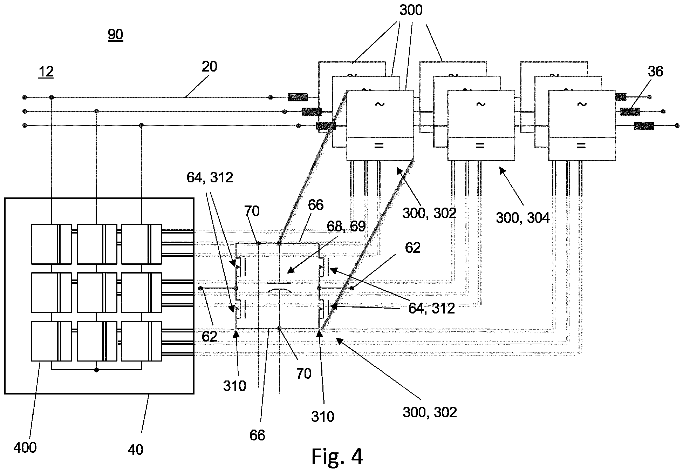

Figur 4 zeigt eine Detailansicht eines Regelmoduls 300. In der hier gezeigten Ausführungsform umfasst das Regelmodul 300 zwei Halbbrücken 310, die jeweils aus zwei in Serie geschalteten Schaltelementen 64 gebildet werden. Die Schaltelemente 64 sind als Transistoren 312 ausgebildet. Bei einem Niederspannungsnetz handelt es sich bei den Transistoren 312 um Kleinspannungstransistoren oder Kleinstspannungstransistoren. Zwischen den beiden DC-Schienen 66 des Regelmoduls 300 ist ein Energiespeicher 68 geschaltet, der als Kondensator 69 ausgebildet sein kann.

Das Regelmodul 300 weist zwei Modulanschlüsse 62 auf, wobei der eine Modulanschluss 62 des ersten Regelmoduls 302 mit dem Leitungsanschluss 60 verbunden ist, während der zweite Modulanschluss 62 mit dem nachfolgenden Regelmodul 304 bzw. mit dessen Modulanschluss 62 verbunden ist.

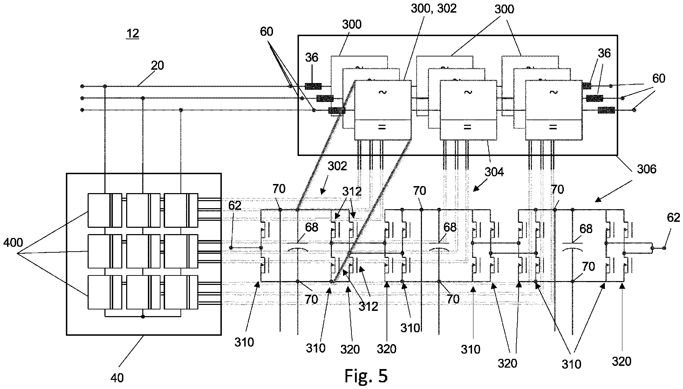

Figur 5 zeigt eine weitere bevorzugte Ausführungsform der Regelmodule 300 der Regelmoduleinheit 30 im Detail.

Das erste Regelmodul 302 weist im Wesentlichen die anhand von Figur 4 beschriebene Struktur auf. Zu der zweiten Halbbrücke 310 ist jedoch eine weitere Halbbrücke 320 parallel geschaltet, die ebenfalls aus zwei in Reihe geschalteten Transistoren 312 aufgebaut ist. In diesem Fall ergibt sich zwischen den beiden Transistoren 312 der jeweiligen Halbrücke 310 bzw. 320 jeweils ein Modulanschluss 62, der mit den Halbbrücken des weiteren Regelmoduls 304 verbunden ist.

Auch das Regelmodul 304 weist im Wesentlichen die Grundstruktur des Regelmoduls 302 gemäß Figur 4 auf. Allerdings ist zu den jeweiligen Halbbrücken 310 jeweils eine weitere Halbbrücke 320 aus zwei in Reihe geschalteten Transistoren 312 vorgesehen.

Das dritte Regelmodul 306 hat die gleiche Struktur wie das Regelmodul 302, allerdings sind die beiden Modulanschlüsse 62 miteinander verbunden. Diese werden mit dem Leitungsanschluss 60 verbunden, an dem die Regelmoduleinheit 30 mit der jeweiligen Leitung 20 verbunden ist.

Auf diese Weise ergibt sich insgesamt eine Ausbildung der Regelmoduleinheit 30, bei der die einzelnen Regelmodule 300 für eine Leitung 20 sowohl seriell als auch parallel verschaltet sind.

Zwischen den gekoppelten und miteinander verschalteten Modulanschlüssen 62 und dem Leitungsanschluss kann der optionale Netzfilter 36 eingefügt sein.

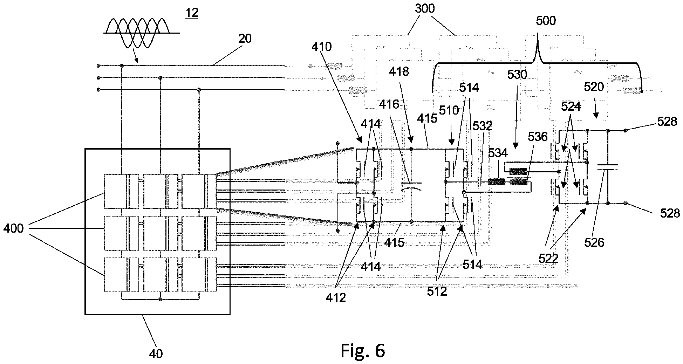

Figur 6 zeigt nun im Detail ein Spannungsmodul der Spannungsversorgungseinheit 40. Das Spannungsmodul umfasst ein Netzinterface 410 mit zwei Halbbrücken 412, die jeweils aus zwei in Reihe geschalteten Transistoren 414 gebildet werden. Zwischen den beiden DC-Schienen 415 ist ein Kondensator 416 angeordnet, der einen Inverterzwischenkreis 418 bildet.

Das Spannungsmodul 400 umfasst neben dem Netzinterface 410 auch eine Wandlereinheit 500, die einen Inverter 510, eine Balanciereinheit 520 und beispielsweise eine Dual-Active-Bridge- oder LLC-Schaltung 530 umfasst. Der Inverter 510 wird aus zwei parallelen Halbbrücken 512 mit jeweils zwei in Reihe geschalteten Transistoren 514 gebildet. Alternativ kann jede LLC-Schaltung gemäß der Erfindung auch eine Dual-Active-Bridge-, Fly-Back- oder andere galvanisch trennende Gleichspannungs-Wandler- oder -Übertrager-Schaltung sein.

Die LLC-Schaltung 530 umfasst einen Kondensator 532 (Kapazität), eine Induktivität 534 sowie eine gekoppelte Induktivität 536. Die LLC-Schaltung 530 dient zur galvanischen Trennung zwischen der Inverterschaltung, also dem Inverter 510, und der Balanciereinheit 520.

Die Balanciereinheit 520 umfasst in der hier gezeigten Ausführungsform zwei parallel geschaltete Halbbrücken 522, die aus je zwei in Reihe geschalteten Transistoren 524 gebildet werden. Parallel zu den beiden Halbbrücken ist ein Kondensator 526 vorgesehen. Die Ausgänge 528 sind dann mit den Energieanschlüssen 70 des jeweiligen Regelmoduls 300 verbunden.

Die hier gezeigte Ausführungsform basiert auf einer rein seriellen Interkonnektivität der jeweiligen Module. Parallele Modi sind zwischen einigen oder allen Modi ebenso möglich.

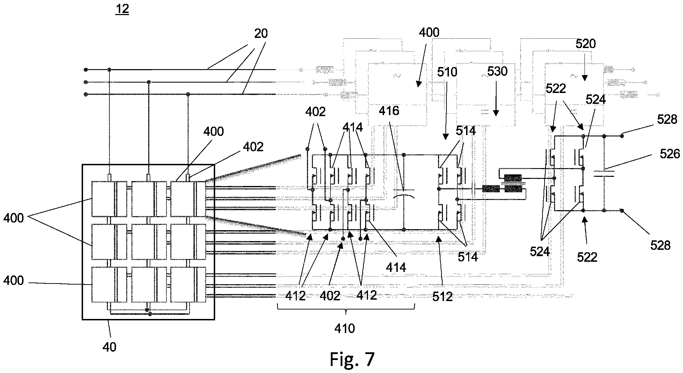

Figur 7 zeigt eine besondere Ausführungsform der Spannungsmodule 400 im Detail. Die jeweiligen Spannungsmodule 400 der Spannungsversorgungseinheit 40 sind in Stern-Schaltung verschaltet und weisen einen doppelt ausgeführten Sternpunkt auf. In diesem Fall kann die Parallelschaltung der Spannungsmodule auch dynamisch zwischen den einzelnen Strängen erfolgen. Bei den ersten Modulen, also den Spannungsmodulen 400, die direkt mit den Leitungen 20 verbunden werden, können die Modulausgänge 402 zusammengeschaltet werden, wie in Figur 7 gezeigt.

Insgesamt weist die Interfaceschaltung, Netzinterface 410, vier parallel geschaltete Halbbrücken 412 auf, die aus jeweils zwei in Reihe geschalteten Transistoren 414 aufgebaut sind. Die (Spannungs-) Modulausgänge 402 dienen zum Anschluss an die Leitung 20 bzw. zum Anschluss an die benachbarten Spannungsmodule 400. Der restliche Aufbau der Spannungsmodule 400 gleicht denen aus Figur 6.

In der hier gezeigten Ausführungsform wird also wieder eine galvanische Trennung mittels der LLC-Schaltung 530 vorgenommen, wobei hier eine dynamische serielle und parallele Konnektivität zwischen den Modulen erzielt wird.

Das Floaten der Spannungsmodule 400 der erfindungsgemäßen Spannungsversorgungseinheit 40 hat zudem den Vorteil, dass die Spannungsversorgungseinheit 40 sehr robust gegen Überspannungen oder Blitzeinschlag ist. Es wird also ein Überspannungsschutz und ein Blitzschutz realisiert.

Dies ist insbesondere wichtig, da sich das Verteilnetz oder Netz 12 zum Teil nur sehr schwer vor Blitzeinschlägen schützen lässt. Mittelspannungsleitungen werden zumindest im ländlichen Raum als Freileitungen mit nah beieinanderliegenden Leiterseilen ausgeführt. Diese sind gegen Blitzeinschläge ungeschützt. Auch Erdleitungen eines Niederspannungsnetzes sind ebenfalls von Blitzeinschlägen betroffen, da die Ortsnetztransformatoren Blitzeinschläge häufig weiterleiten. Durch den fehlenden Erdbezug und die galvanische Trennung der elektronischen Phaseneinspeisemodule (Spannungsmodule 400) sowie den fehlenden Potentialbezug untereinander folgen die Spannungsmodule 400 auch einer Spannungsspitze eines Blitzeinschlags oder von anderen Potentialfluktuationen ebenso. Die Spannungsmodule 400 folgen der Potentialspitze beispielsweise auch, wenn mehrere Tausend Volt anliegen. Dementsprechend steigt die Spannung jedes Punkts des Spannungsmoduls 400 gleichzeitig um die Erdspannung. Die relevanten Differenzspannungen zwischen Punkten im Modul bleiben jedoch konstant, sodass das Spannungsmodul 400 trotzdem weiterhin nur mit Niederspannungsbauteilen aufgebaut sein kann. Die verwendeten Transistoren 414 und Kondensatoren 416 sowie die Transistoren 514 und 524 sind folglich nur für kleine Spannungen ausgelegt. Beispielsweise kann beim Einsatz in Niederspannungsnetzen bis 400 V die Auslegung auf 100 V, bevorzugt auf 50 V, sehr bevorzugt auf 20 V reduziert sein. Für Netze oder Leitungen mit höherer Spannung kann gemäß der Erfindung die Zahl der Regelmodule und/oder die Spannung einzelner oder aller Module erhöht werden. Bevorzugt skaliert das Produkt aus Anzahl der Regelmodule und die mittlere Spannung aller Module näherungsweise mit der Scheitelspannung der Leitung.

Da die Spannungsmodule räumlich relativ klein sind, beispielsweise kleiner als eine Euro-Platine, können sich auch keine großen kapazitiven oder induktiven Spannungsunterschiede innerhalb der Module aufbauen, welche zu Schäden führen könnten.

Insgesamt beruht der Grundgedanke der Erfindung darauf, floatende und transformatorfreie Regelmodule zu verwenden und in den einzelnen Modulen zu kombinieren. Jedes Einzelmodul wird vorzugsweise mit einem Spannungsmodul versorgt. Auf diese Weise kann jedes Einzelmodul mit Bauteilen aufgebaut werden, welche weit unter der Betriebsspannung oder Netzspannung liegen. Durch Kombination der Einzelmodule (Regelmodule 300 und Spannungsmodule 400) können auch der Mittelspannungsbereich und der Hochspannungsbereich, also Spannungsbereiche von 20 kV bis 400 kV, bedient werden.

Auch wenn in den hier beschriebenen Ausführungsformen jeweils nur von zwei oder drei Modulen pro Leitung, insbesondere von zwei oder drei Regelmodulen, die Rede war, wird sich in der Praxis jedoch häufig ein Aufbau finden, der fünf oder mehr in Reihe geschaltete Regelmodule aufweist und dessen Spannungsversorgungseinheit 40 entsprechend viele Spannungsmodule 400 hat.

Im Rahmen der Erfindung wurde festgestellt und konnte in Versuchen gezeigt werden, dass bei der Kaskadierung der einzelnen Module, also deren Reihenschaltung, auch höhere Spannungen bedient werden können. Beispielsweise können Regelmodule auf eine Spannung von 100 V ausgelegt werden, während das Gesamtsystem eine Spannung von 1 kV aufweist. Im Mittelspannungsbereich bis ca. 30 kV lassen sich so Module verwenden, die auf eine Spannung von ca. 1 kV ausgelegt sind. Durch eine derartige Reduzierung der Spannungsanforderungen können günstige und in vielen Ausführungen vorhandene Bauteile und Bauelemente verwendet werden. Dies macht das Leistungsfluss-Regelsystem 90 insgesamt sehr preiswert. Zudem können die Bauteile auf engstem Raum platziert werden. So lassen sich die Spannungsmodule im Niedervoltbereich auf einer Euro-Platine aufbauen. Im niedrigen Kilovoltbereich lässt sich noch immer ein für Personen tragbares Modul (beispielsweise < 29 kg) ausformen. Insgesamt wird das System damit sehr klein, zeigt wenig Abwärme und lässt sich auch leicht nachträglich in bestehende Infrastruktur einbauen.

Die Erfindung wurde anhand der Zeichnungen und der Beschreibung umfassend beschrieben und erklärt. Die Beschreibung und Erklärung sind als Beispiel und nicht einschränkend zu verstehen. Die Erfindung ist nicht auf die offenbarten Ausführungsformen beschränkt. Andere Ausführungsformen oder Variationen ergeben sich für den Fachmann bei der Verwendung der vorliegenden Erfindung sowie bei einer genauen Analyse der Zeichnungen, der Offenbarung und der nachfolgenden Patentansprüche.

In den Patentansprüchen schließen die Wörter "umfassen" und "mit" nicht das Vorhandensein weiterer Elemente oder Schritte aus. Der undefinierte Artikel "ein" oder "eine" schließt nicht das Vorhandensein einer Mehrzahl aus. Ein einzelnes Element oder eine einzelne Einheit kann die Funktionen mehrerer der in den Patentansprüchen genannten Einheiten ausführen. Ein Element, eine Einheit, eine Vorrichtung und ein System können teilweise oder vollständig in Hard- und/oder in Software umgesetzt sein. Beispielsweise kann eine zur Regelung eingesetzte Regeleinheit ganz oder teilweise in Software realisiert werden. Die Software oder das entsprechende Computerprogramm zur Regelung kann auf einem nichtflüchtigen Datenträger gespeichert/vertrieben werden, beispielsweise auf einem optischen Speicher oder auf einem Halbleiterspeicher (Flash, SSD). Ein Computerprogramm kann zusammen mit Hardware und/oder als Teil einer Hardware vertrieben werden, beispielsweise mittels des Internets.

Die bloße Nennung einiger Maßnahmen in mehreren verschiedenen abhängigen Patentansprüchen ist nicht dahingehend zu verstehen, dass eine Kombination dieser Maßnahmen nicht ebenfalls vorteilhaft verwendet werden kann. Bezugszeichen in den Patentansprüchen sind nicht einschränkend zu verstehen.

### Bezugszeichen

- 10: Netzsegment
- 12: Netz
- 20: Leitung
- 30: Regelmoduleinheit
- 32: AC-Teil
- 34: DC-Teil
- 36: Netzfilter
- 38: Leitung
- 40: Spannungsversorgungseinheit
- 42: Leitung
- 60: Leitungsanschluss
- 62: Modulanschluss
- 64: Schaltelement
- 66: DC-Schiene
- 68: Energiespeicher
- 69: Kondensator
- 70: Energieanschluss
- 90: Leistungsfluss-Regelsystem
- 300: Regelmodul
- 302: Regelmodul
- 304: Regelmodul
- 306: Regelmodul
- 310: Halbbrücke
- 312: Transistor
- 320: Halbbrücke

- 400: Spannungsmodul
- 402: Modulausgang
- 410: Netzinterface
- 412: Halbbrücke
- 414: Transistor
- 415: DC-Schiene
- 416: Kondensator
- 418: Inverterzwischenkreis
- 420: Inverter
- 422: Halbbrücke
- 424: Transistor
- 500: Wandlereinheit
- 510: Inverter
- 512: Halbbrücke
- 514: Transistor
- 520: Balanciereinheit
- 522: Halbbrücke
- 524: Transistor
- 526: Kondensator
- 528: Ausgang
- 530: LLC-Schaltung
- 532: Kondensator
- 534: Induktivität
- 536: Induktivität
- 600: Hochfrequenztransformator

## Patentansprüche

1. Regelmoduleinheit (30) für ein Leistungsfluss-Regelsystem (90), welches eingerichtet ist zum Einsatz in einem elektrischen Netz (12) und zum Anpassen der Spannung und/oder des Stroms in mindestens einer Leitung (20) des Netzes (12),
umfassend zwei Leitungsanschlüsse (60), die dazu ausgebildet sind, die Regelmoduleinheit (30) elektrisch in Serie mit der Leitung (20) des Netzes (12) zu schalten, und ein erstes Regelmodul (300, 302) und ein weiteres Regelmodul (300, 304), das zu dem ersten Regelmodul (300, 302) in Serie geschaltet ist,
jedes Regelmodul (300) umfassend mindestens zwei Modulanschlüsse (62) zum seriellen Anschluss an einen der Leitungsanschlüsse (60) oder an einen Modulanschluss (62) eines benachbarten Regelmoduls (300), zwei Halbbrücken (310) aus mehreren in Serie geschalteten Schaltelementen (64), einen zwischen den Halbbrücken (310) parallel geschalteten Energiespeicher (68) und zwei Energieanschlüsse (70) zum Anschluss an eine Spannungsversorgungseinheit (40),
wobei
die Halbbrücken (310) des Regelmoduls (300) jeweils mit einem der Modulanschlüsse (62) elektrisch verbunden sind;
das Regelmodul (300) derart verschaltet ist, dass eine elektrische Verbindung mit der Spannungsversorgungseinheit (40) herstellbar ist, die es erlaubt, dass das Potential des Regelmoduls (300) dem Potential der Leitung (20) des Netzes (12) folgt; und
die Schaltelemente (64) dazu ausgebildet sind, die Amplitude der Spannung auf zumindest einer ersten Seite der Leitung (20) gegenüber einer zweiten Seite der Leitung (20) zu erhöhen oder zu reduzieren, um die Spannung anzupassen, um die Phase der Spannung zu verschieben oder um den Stromfluss in der Leitung (20) entsprechend zu steuern.

2. Regelmoduleinheit (30) nach Anspruch 1, **dadurch gekennzeichnet, dass** das erste Regelmodul (300, 302) mindestens eine weitere Halbbrücke (320) aus in Serie geschalteten Schaltelementen (64) aufweist, die parallel zu der mit dem benachbarten Regelmodul (300, 304) über den Modulanschluss (62) verbundene Halbbrücke (310) geschaltet ist, und
das weitere Regelmodul (300) zu jeder Halbbrücke (310) eine weitere, parallel geschaltete Halbbrücke (320) aufweist;
wobei die weiteren Halbbrücken (320) mit einem weiteren Modulanschluss (62) des Regelmoduls (300) elektrisch verbunden sind.

3. Spannungsversorgungseinheit (40) mit mehreren Spannungsmodulen (400), wobei jedes Spannungsmodul (400) dazu ausgebildet und eingerichtet ist, um ein oder mehrere Regelmodule (300) eines Leistungsfluss-Regelsystems (90) mit Energie zu versorgen, um ein Anpassen der Spannung und/oder des Stroms in der Leitung (20) eines elektrischen Netzes (12) zu bewirken, und wobei jedes Spannungsmodul (400) ein Netzinterface (410) zum Anschluss an ein elektrisches Netz (12) und eine Wandlereinheit (500) zum Anschluss an wenigstens ein Regelmodul (300) umfasst.

4. Spannungsversorgungseinheit (40) nach Anspruch 3, **dadurch gekennzeichnet, dass** die Spannungsmodule (400) in Stern-Schaltung oder in Dreieck-Schaltung miteinander verschaltet sind.

5. Spannungsversorgungseinheit (40) nach Anspruch 3 oder 4, **dadurch gekennzeichnet, dass** jedes Spannungsmodul (400) mit einem Regelmodul (300) elektrisch verbunden ist und das eine Regelmodul (300) mit Energie versorgt, um ein Anpassen der Spannung und/oder des Stroms in der Leitung (20) eines elektrischen Netzes (12) zu bewirken.

6. Spannungsversorgungseinheit (40) nach einem der Ansprüche 3 bis 5, **dadurch gekennzeichnet, dass** die Wandlereinheit (500) einen Inverter (510) mit wenigstens einer Halbbrücke (512) aus Schaltelementen (64) und eine Balanciereinheit (520) mit wenigstens einer Halbbrücke (522) aus Schaltelementen (64) umfasst und bevorzugt einen Hochfrequenztransformator (600) zwischen Inverter (510) und Balanciereinheit (520) aufweist.

7. Spannungsversorgungseinheit (40) nach dem vorhergehenden Anspruch, **dadurch gekennzeichnet, dass** wenigstens eines der Spannungsmodule (400) eine LLC-Schaltung (530) umfassend eine Kapazität und zwei gekoppelte Induktivitäten (534, 536) oder einen Übertrager oder eine Dual-Active-Bridge-Schaltung umfassend zwei gekoppelte Induktivitäten (534, 536) oder einen Übertrager als galvanische Trennung zwischen dem Inverter (510) und der Balanciereinheit (520) aufweist.

8. Spannungsversorgungseinheit (40) nach einem der vorhergehenden Ansprüche, **dadurch gekennzeichnet, dass** die Spannungsmodule (400) seriell verschaltet sind.

9. Spannungsversorgungseinheit (40) nach einem der vorhergehenden Ansprüche, **dadurch gekennzeichnet, dass** zwischen den Spannungsmodulen (400) eine dynamische serielle und parallele Verschaltung vorgesehen ist.

10. Spannungsversorgungseinheit (40) nach einem der vorhergehenden Ansprüche, **dadurch gekennzeichnet, dass** die Spannungsmodule (400) eine galvanisch getrennte Verbindung zu den Regelmodulen (300) ermöglichen, die eine magnetische Kopplung umfasst, bevorzugt mittels eines Hochfrequenztransformators (600).

11. Leistungsfluss-Regelsystem (90), eingerichtet zum Einsatz in einem elektrischen Netz (12) und eingerichtet zum Anpassen der Spannung und/oder des Stroms in mindestens einer Leitung (20) des Netzes (12), umfassend eine Regelmoduleinheit (30) mit wenigstens zwei Regelmodulen (300), bevorzugt nach einem der Ansprüche 1 oder 2, und eine Spannungsversorgungseinheit (40), bevorzugt nach einem der Ansprüche 3 bis 9, mit wenigstens zwei Spannungsmodulen (400) zur elektrischen Versorgung der Regelmoduleinheit (30), wobei zwischen der Regelmoduleinheit (30) und der Spannungsversorgungseinheit (40) eine galvanisch getrennte Verbindung besteht, die dem elektrischen Potential der Regelmoduleinheit (30) dem Potential der Leitung (20) des Netzes (12) zu folgen erlaubt.

12. Leistungsfluss-Regelsystem (90) nach dem vorhergehenden Anspruch, **dadurch gekennzeichnet, dass** die Wandlereinheit (500) an die Energieanschlüsse (70) eines Regelmoduls (300) angeschlossen ist und die Wandlereinheit (500) zwischen Regelmodul (300) und Netzinterface (410) geschaltet ist.

13. Leistungsfluss-Regelsystem (90) nach Anspruch 11 oder 12, **dadurch gekennzeichnet, dass** die Wandlereinheit (500) der Spannungsversorgungseinheit (40) einen Inverter (510) mit wenigstens zwei Halbbrücken (512) hat, wobei bevorzugt jede Halbbrücke (512) zwei Transistoren (514) umfasst.
